# FASCICULE DE BREVET EUROPEEN

(11) **EP 3 990 214 B1**
(45) Date de publication et mention de la délivrance du brevet: **26.07.2023**
(21) Numéro de dépôt: 20785778.0
(22) Date de dépôt: 18.06.2020
(51) Int. Cl.: B23P 15/04, C23C 8/30, F01D 5/14, B21K 3/04, C23C 8/02, C23C 8/36, C23C 8/80, F01D 5/28, F04D 29/02, F04D 29/32

(54) **NOYAU DE CONFORMATION À CHAUD D'UNE PIÈCE MÉTALLIQUE ET PROCÉDÉ DE FABRICATION, DE RÉGÉNÉRATION ET DE CONFORMATION**
KERN ZUR HOCHTEMPERATURVERFORMUNG EINES METALLTEILS UND VERFAHREN ZUR HERSTELLUNG, REGENERIERUNG UND FORMGEBUNG
CORE FOR HIGH-TEMPERATURE SHAPING OF A METAL PART AND MANUFACTURING, REGENERATION AND SHAPING PROCESS

(30) Priorité: 28.06.2019 FR 1907190
(43) Date de publication de la demande: 04.05.2022
(73) Titulaire: SAFRAN AIRCRAFT ENGINES, 75015 Paris (FR)
(72) Inventeur: KLEIN, Gilles, Charles, Casimir, 77550 MOISSY-CRAMAYEL (FR); MAGNAUDEIX, Dominique, Michel, Serge, 77550 MOISSY-CRAMAYEL (FR)
(74) Mandataire: Cabinet Beau de Loménie
(86) Numéro de dépôt international: PCT/FR2020/051060
(87) Numéro de publication internationale: WO 2020/260805

(56) Documents cités:
- EP-A1- 1 582 278
- WO-A1-2016/027207
- FR-A1- 3 026 033
- FR-A1- 3 049 883
- JP-A- 2001 025 843

## Description

### Domaine technique

Le présent exposé concerne la fabrication d'une pièce métallique en alliage à base de titane, telle qu'un bouclier de bord d'attaque d'une aube de turbine.

### Technique antérieure

De tels boucliers de bord d'attaque sont typiquement destinés à protéger les bords d'attaque d'aubes tournantes contre les impacts. On entend par « aubes », dans ce contexte, tant les aubes de soufflante que les pales d'hélice aérienne. Afin de limiter leur poids, ces aubes sont typiquement en composite à matrice en polymère renforcée par des fibres. Bien que ces matériaux présentent des qualités mécaniques généralement très favorables, en particulier par rapport à leur masse, ils sont particulièrement sensibles aux impacts ponctuels, qui peuvent générer notamment des phénomènes de délaminage au sein du matériau. Des boucliers, typiquement en matériau métallique hautement résistant, comme les alliages de titane, sont donc normalement installés sur les bords d'attaque de telles aubes, afin de les protéger contre ces impacts. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados. Les ailettes intrados et extrados s'étendent sur ces sections de, respectivement, l'intrados et l'extrados de l'aube, et servent principalement à assurer le positionnement et la fixation du bouclier sur le bord d'attaque.

Afin d'améliorer les performances aérodynamiques des aubes, leur bord d'attaque présente des formes de plus en plus complexes, ce qui complique la fabrication des boucliers devant épouser ces formes.

Dans un procédé, le bouclier est fabriqué principalement par forgeage à partir d'une barre d'alliage, avec des étapes successives de cambrage, bourrage et filage, avec une étape finale de vrillage pour rapprocher les ailettes et calibrer la section plus épaisse. L'application de ce procédé connu à des matériaux aussi résistants que les alliages de titane typiquement employés pour les boucliers de bord d'attaque présente toutefois des inconvénients importants : des coûts élevés de fabrication dus à une usure importante des outils de forgeage et à un nombre important d'étapes de fabrication et des inconvénients techniques dus à une grande difficulté pour obtenir des épaisseurs très fines pour les ailettes ou des petits rayons de transition entre les ailettes et la section plus épaisse.

Le document WO2011/114073 décrit un procédé de formage à chaud d'un bouclier autour d'un noyau. Ce noyau peut éventuellement être recouvert d'une barrière anti-diffusion composée d'une couche d'oxyde d'yttrium. Cependant, cette couche d'oxyde d'yttrium doit être déposée par dépôt plasma. Cette technique a un coût relativement élevé et il peut s'avérer difficile d'obtenir une couche uniforme sur toute la surface extérieure du noyau. En effet, la forme de plus en plus complexe des aubes et donc des bords d'attaque de ces aubes rend également de plus en plus complexe la forme du noyau sur lequel le bord d'attaque est conformé.

Par ailleurs, il s'avère que la couche d'oxyde d'yttrium se dégrade relativement rapidement ce qui restreint les possibilités de réutilisation du noyau. Aussi, le coût d'un tel procédé est relativement élevé.

Le document FR3049883 décrit un procédé de carbonitruration d'un noyau en alliage à base de nickel ou de cobalt permettant de former une barrière de diffusion entre l'alliage métallique du noyau et l'alliage à base de titane de la pièce métallique à conformer.

Cependant, le traitement de carbonitruration du noyau en alliage à base de nickel ou de cobalt est généralement supérieur à 100 heures, voire de l'ordre de 150 heures, ce qui est très long.

Dans la description qui suit les termes « amont » et « aval » sont définis par rapport au sens de circulation normal de l'air le long de l'extérieur de la paroi annulaire de la chambre de combustion. les termes « intérieur » et « extérieur » indiquent la région à l'intérieur et à l'extérieur de la chambre de combustion, respectivement.

### Exposé de l'invention

Le présent exposé vise à remédier au moins en partie à ces inconvénients.

Le présent exposé concerne un noyau métallique pour conformation à chaud d'une pièce métallique en alliage à base de titane, le noyau métallique comprenant un coeur en alliage à base de nickel ou de cobalt, l'alliage à base nickel ou de cobalt comprenant du chrome, du molybdène et / ou du titane et le noyau métallique comprenant un revêtement en acier comportant une surface extérieure destinée à venir en contact avec la pièce métallique, le revêtement en acier présentant une couche de matériau enrichi en carbonitrure métallique.

Grâce au noyau métallique comprenant un alliage à base de nickel ou de cobalt, il est possible de conformer à chaud une pièce métallique en alliage à base de titane, telle qu'une pièce métallique destinée à former un bord d'attaque d'une aube tournante. Cette conformation à chaud permet, par déformation plastique à chaud de la pièce métallique, de fabriquer une pièce de géométrie tridimensionnelle complexe même au départ de tôles particulièrement rigides qui présente des propriétés physiques particulièrement avantageuses, notamment une grande résistance à la fatigue. En effet, les alliages à base de nickel ou de cobalt ne se déforment pas ou peu à des températures élevées, par exemple 1000°C.

Grâce également au fait que l'alliage à base nickel ou de cobalt comprenne du chrome, du molybdène et / ou du titane, la couche de matériau enrichi en carbonitrure métallique formée en surface du noyau métallique est stable à haute température, notamment thermodynamiquement. On notera que plus la teneur massique en chrome, molybdène et / ou titane est élevée, plus la couche de matériau enrichi en carbonitrure métallique est stable.

Grâce au revêtement en acier, le noyau métallique peut être plus facilement carbonitruré.

De plus, un acier enrichi en carbonitrure métallique peut présenter avantageusement une dureté Vickers supérieure ou égale à 900 HV, de préférence supérieure ou égale à 1000 HV. La dureté Vickers d'un acier peut être mesurée par un test de mircrodureté selon la norme EN ISO 6507-1.

Comme exemple d'acier pouvant être utilisé pour former le revêtement en acier, on peut citer, de manière non exhaustive, des aciers du type 25CD4, du type 18CD4 ou du type 100C6 selon la norme AFNOR. Ces aciers ont des teneurs relativement peu élevée en carbone, généralement inférieure ou égale à 1 % en masse +/- 0,5 %.

Par ailleurs, grâce à la couche de matériau enrichi en carbonitrure métallique présente en surface extérieure du noyau métallique destinée à venir en contact avec la pièce métallique, après la conformation à chaud de la pièce métallique sur le noyau métallique, le noyau métallique et la pièce métallique peuvent être séparés de manière aisée. En effet, lors de l'étape de conformation à chaud, il n'y a pas de collage et / ou de réaction chimique entre le noyau métallique et la pièce métallique. En effet, la pièce métallique est en contact avec la couche de matériau enrichi en carbonitrure métallique et non avec l'alliage à base de nickel ou de cobalt formant le noyau métallique.

Cette couche de matériau enrichi en carbonitrure métallique est inerte chimiquement et physiquement vis-à-vis de la pièce métallique. Cette couche, de par la dispersion de carbures et nitrures forme une barrière de diffusion entre l'alliage du noyau métallique et l'alliage à base de titane de la pièce métallique. On limite ainsi la contamination de la pièce métallique en alliage à base de titane par des éléments de l'alliage à base de nickel ou de cobalt du noyau métallique.

Ainsi, le noyau métallique peut être utilisé pour conformer à chaud la pièce métallique en lui donnant une forme de géométrie tridimensionnelle complexe ne nécessitant pas ou peu, après retrait du noyau métallique, d'usinage de la surface de la pièce métallique qui a été en contact avec le noyau métallique. Ce noyau métallique présentant une surface inerte vis-à-vis de la pièce métallique peut être utilisé pour conformer à chaud successivement plusieurs pièces métalliques. Le noyau métallique est donc un outil qui est utilisé pour la fabrication de plusieurs pièces métalliques et non un consommable qui n'est utilisé que pour former une seule pièce métallique.

On entend par alliage à base de titane, des alliages dont la teneur massique en titane est majoritaire. On comprend que le titane est donc l'élément dont la teneur massique dans l'alliage est la plus élevée. Avantageusement, l'alliage à base de titane a une teneur massique d'au moins 50% de titane, de préférence d'au moins 70% de titane, encore plus préférentiellement d'au moins 80% de titane. De la même manière, on entend par alliage à base de nickel ou de cobalt, des alliages métalliques dont la teneur massique en nickel ou en cobalt est majoritaire. Ainsi, l'alliage à base de nickel ou de cobalt pourra avoir une teneur massique en nickel ou en cobalt d'au moins 40%, de préférence 50%.

Le matériau enrichi en carbonitrure métallique peut être obtenu par diffusion, dans un alliage métallique, d'atomes de carbone et d'azote. Ces atomes de carbone et d'azote réagissent avec les atomes de l'alliage métallique pour former une couche de matériau qui comprend des atomes de l'alliage métallique de départ liés à des atomes de carbone et / ou d'azote. Cette couche peut comprendre des carbures, des nitrures et / ou des carbonitrures métalliques dont les compositions chimiques et pondérales peuvent varier en fonction de l'emplacement où elles sont mesurées dans cette couche. On comprend que cette couche peut également comprendre des atomes de l'alliage métallique d'origine non liés à des atomes de carbone ou d'azote.

Dans certains modes de réalisation, l'alliage à base nickel ou de cobalt comprend du chrome, du molybdène et / ou du titane.

Dans certains modes de réalisation, le revêtement en acier présente une épaisseur supérieure ou égale à 50 µm(micromètre), de préférence supérieure ou égale à 75 µm et inférieure ou égale à 200 µm de préférence inférieure ou égale à 150 µm.

Dans certains modes de réalisation, la surface extérieure présente une rugosité de surface Ra supérieure ou égale à 0,5 µm, de préférence supérieure ou égale à 0,7 µm et inférieure ou égale à 10 µm, de préférence inférieure ou égale à 5 µm.

On comprend que la rugosité de surface Ra est la rugosité de surface de la surface extérieure du revêtement en acier après carbonitruration.

Dans certains modes de réalisation, le revêtement en acier présente une épaisseur supérieure ou égale à une épaisseur de la couche de matériau enrichi en carbonitrure métallique.

Le présent exposé concerne également un procédé de fabrication d'un noyau métallique tel que défini précédemment, comprenant les étapes suivantes :
- fabrication du coeur du noyau métallique ;
- revêtement du coeur par un revêtement en acier ; et
- carbonitruration de la surface extérieure du revêtement en acier de sorte à obtenir une couche de matériau enrichi en carbonitrure métallique.

Le revêtement en acier peut être déposé par toute méthode adaptée, par exemple par dépôt plasma, par fabrication additive, par dépôt physique gazeux par faisceau d'électrons, appelé EBPVD conformément au sigle anglais pour « Electron Beam Physical Vapor Déposition », par mise en place d'un feuillard préformé et assemblé, par exemple par soudage diffusion (par exemple par un procédé de pressage isostatique à chaud, appelé HIP conformément au sigle anglais pour « Hot Isostatique Pressing », sur le coeur du noyau métallique.

Dans certains modes de réalisation, la carbonitruration de la surface extérieure du revêtement en acier est réalisée pendant un temps inférieur ou égal à 10 heures, de préférence inférieur ou égal à 8 heures, de préférence inférieur ou égal à 6 heures et supérieur ou égal à 0,5 heure, de préférence supérieur ou égal à 1 heure.

Dans certains modes de réalisation, avant l'étape de carbonitruration, le revêtement en acier est sablé.

Le sablage permet une activation de la surface et l'ouverture de la porosité et permet ainsi de faciliter la pénétration du carbone et de l'azote.

Le sablage peut être réalisé avec du corindon blanc.

Le présent exposé concerne également un procédé de régénération d'un noyau métallique tel que défini précédemment, comprenant les étapes suivantes :
- enlèvement du revêtement en acier ;
- revêtement du coeur par un nouveau revêtement en acier comportant une nouvelle surface extérieure destinée à venir en contact avec la pièce métallique ; et
- carbonitruration de la nouvelle surface extérieure du nouveau revêtement en acier de sorte à obtenir une nouvelle couche de matériau enrichi en carbonitrure métallique.

Ainsi, lorsqu'après plusieurs utilisations du noyau métallique, par exemple 10 utilisations, de préférence 30 utilisations, encore plus préférentiellement 50 utilisations, le revêtement en acier enrichi en carbonitrure métallique se dégrade, il est possible de remplacer le revêtement en acier enrichi en carbonitrure métallique en retirant le revêtement en acier dégradé, en déposant un nouveau revêtement en acier et en réalisant une nouvelle étape de carbonitruration du nouveau revêtement en acier. Cela permet donc de prolonger la durée de vie du noyau métallique.

Le présent exposé concerne également un procédé de conformation à chaud d'une pièce métallique en alliage à base de titane, comprenant les étapes suivantes :
- positionnement de la pièce métallique autour d'un noyau métallique tel que défini précédemment ;
- conformation à chaud de la pièce métallique autour du noyau ; et
- extraction du noyau métallique.

Ainsi, grâce à l'utilisation d'un noyau métallique comprenant un revêtement en acier présentant, en surface, une couche de matériau enrichi en carbonitrure métallique, une pièce métallique en alliage à base de titane peut être fabriquée par conformation à chaud sans collage du noyau métallique et de la pièce métallique et sans contamination de la pièce métallique par l'alliage du noyau métallique. Par ailleurs, la surface de la pièce métallique en contact avec le noyau métallique ne nécessite pas ou peu d'usinage, ce qui est économiquement avantageux. On notera également que le coût de production d'un bord d'attaque est réduit vu que le même noyau peut être réutilisé plusieurs fois, par exemple au moins 10 fois.

Dans certains modes de réalisation, la pièce métallique est un bouclier de bord d'attaque d'une aube rotative.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue schématique en perspective d'un turboréacteur à double flux.
[Fig. 2] La figure 2 est une vue schématique en perspective d'une aube tournante de la soufflante du turboréacteur de la figure 1.
[Fig. 3] La figure 3 est une vue schématique en perspective d'un bouclier de bord d'attaque de l'aube de la figure 2.
[Fig. 4] La figure 4 est une vue en coupe transversale, suivant le plan IV-IV, du bouclier de la figure 3.
[Fig. 5A-5E] Les figures 5A à 5E illustrent des étapes successives d'un procédé de fabrication du bouclier de la figure 4.
[Fig. 6] La figure 6 est une vue en perspective d'un noyau métallique.
[Fig. 7] La figure 7 est une vue agrandie en coupe du noyau métallique de la figure 6.
[Fig. 8] La figure 8est un ordinogramme représentant les étapes d'un procédé de fabrication d'un noyau métallique.
[Fig. 9] La figure 9 est un ordinogramme représentant les étapes d'un procédé de régénération d'un noyau métallique.

Sur l'ensemble des figures, les éléments en commun sont repérés par des références numériques identiques.

### Description détaillée

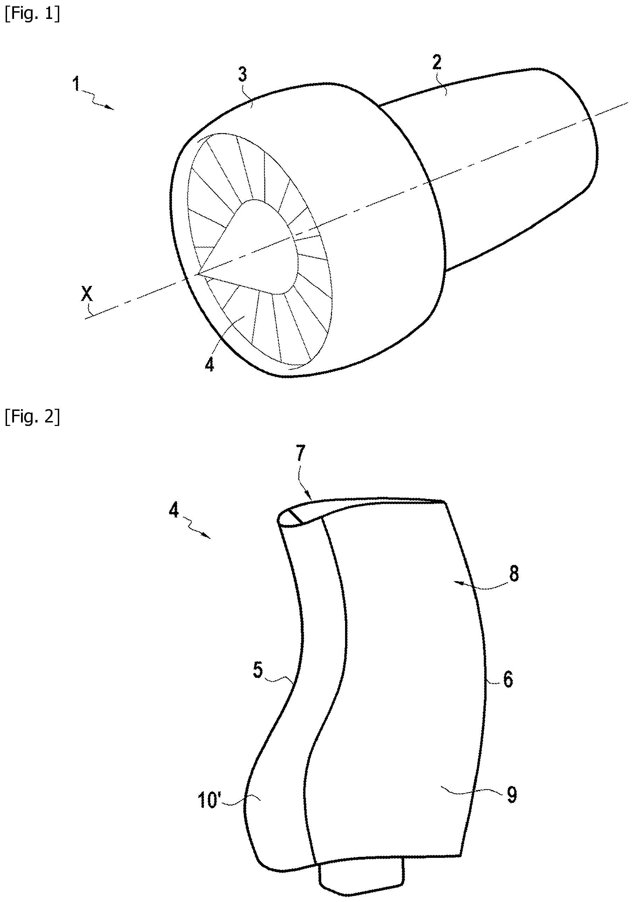

La figure 1 illustre un turboréacteur à double flux 1 comprenant un groupe générateur de gaz 2 et une soufflante 3. Cette soufflante 3 comprend une pluralité d'aubes tournantes 4, arrangées radialement autour d'un axe central X, et profilées aérodynamiquement de manière à impulser l'air par leur rotation. Ainsi, comme illustré sur la figure 2, chaque aube 4 présente un bord d'attaque 5, un bord de fuite 6, un extrados 7 et un intrados 8.

En fonctionnement normal, le vent relatif est sensiblement orienté vers le bord d'attaque 5 de chaque aube 4. Ainsi, ce bord d'attaque 5 est particulièrement exposé aux impacts. En particulier quand l'aube 4 comprend un corps 9 en matériau composite, notamment à matrice polymère renforcée par des fibres, il convient donc de protéger le bord d'attaque 5 avec un bouclier 10' intégré à chaque aube.

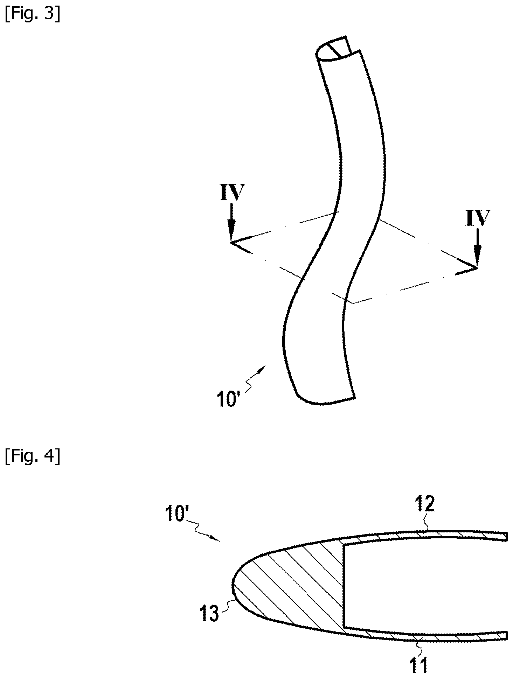

Les figures 3 et 4 illustrent ce bouclier 10' qui présente une ailette intrados 11, une ailette extrados 12 et une section centrale 13 plus épaisse, destinée à chevaucher le bord d'attaque de l'aube 4 et reliant l'ailette intrados 11 et l'ailette extrados 12. Les ailettes intrados et extrados 11, 12 assurent le positionnement du bouclier 10' sur l'aube 4. Le bouclier 10' est principalement métallique, et plus spécifiquement en alliage à base de titane, comme par exemple le TA6V (Ti-6AI-4V). Le bouclier 10' est donc un exemple de pièce métallique 10 en alliage à base de titane.

Comme l'on peut apprécier sur les figures 3 et 4, la forme de ce bouclier 10' peut être assez complexe, ce qui, combiné aux matériaux à hautes performances typiquement utilisés pour cette pièce, peut rendre sa fabrication coûteuse et difficile, en particulier lorsque le noyau traditionnellement utilisé pour la conformation à chaud du bord d'attaque ne peut être utilisé qu'une ou deux fois.

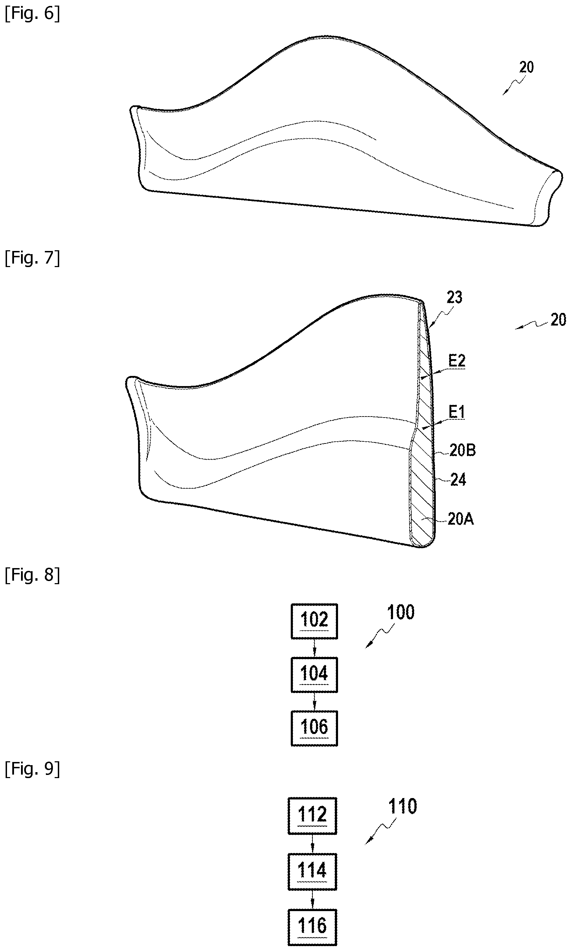

Un exemple de noyau métallique 20 pour conformation à chaud d'une pièce métallique 10 est représenté en figure 6. Dans l'exemple de la figure 6, la pièce métallique 10 est un bouclier de bord d'attaque 10' d'une aube rotative.

Le procédé de fabrication 100 du noyau métallique noyau 20 est présenté en figure 8. Le noyau métallique 20 est obtenu par formation d'un coeur 20A en alliage à base de nickel ou de cobalt du noyau métallique 20 (étape 102) revêtu d'un revêtement en acier 20B (étape 104) et par carbonitruration (étape 106) d'une surface extérieure 23 du noyau métallique 20, c'est-à-dire du revêtement en acier 20B. Cette carbonitruration peut notamment être réalisée par formation d'un plasma de carbone et d'azote aussi appelée, carbonitruration ionique ou carbonitruration plasma. Cette technique réactive permet de faire diffuser le carbone et l'azote en profondeur dans le revêtement en acier 20B et de créer en surface 23 du revêtement en acier 20B, et donc du noyau métallique 20, une couche de matériau enrichi en carbonitrure métallique 24.

Comme on peut le voir sur la figure 7, on obtient ainsi le noyau métallique 20 qui comprend le coeur 20A en alliage à base de nickel ou de cobalt du noyau métallique 20, le coeur 20A étant revêtu du revêtement en acier 20B qui présente, sur la surface extérieure 23, une couche de matériau enrichi en carbonitrure métallique 24.

Dans le mode de réalisation de la figure 7, la couche de matériau enrichi en carbonitrure métallique 24 est confondue avec le revêtement en acier 20B, c'est-à-dire que tout le revêtement en acier 20B est enrichi en carbonitrure métallique. Dans ce mode de réalisation, l'épaisseur E1 du revêtement en acier 20B est égale à l'épaisseur E2 de la couche de matériau enrichi en carbonitrure métallique 24.

Dans d'autres modes de réalisation, l'épaisseur E2 de la couche de matériau enrichi en carbonitrure métallique 24 peut être inférieure à l'épaisseur E1 du revêtement en acier 20B.

La carbonitruration ionique peut par exemple être réalisée à 500°C pendant 4 heures. Ces conditions permettent d'obtenir une couche de matériau enrichi en carbonitrure dont l'épaisseur est égale à l'épaisseur E du revêtement en acier 20B.

L'épaisseur E du revêtement en acier est par exemple de 100 µm dont la dureté Vickers est supérieure ou égale à 1000 HV et la rugosité de surface Ra du revêtement en acier après carbonitruration est par exemple de entre 1 et 10 µm.

Le procédé de régénération 110 du noyau métallique noyau 20 est présenté en figure 9. Après avoir été soumis à plusieurs cycles thermiques de conformation à chaud, la couche de matériau enrichi en carbonitrure métallique 24 peut être endommagée. On peut remplacer le revêtement en acier 20B enrichi en carbonitrure métallique. Le procédé de régénération 110 comprend une étape 112 d'enlèvement du revêtement en acier 20B, une étape 114 de revêtement du coeur 20A par un nouveau revêtement en acier comportant une nouvelle surface extérieure destinée à venir en contact avec la pièce métallique et une étape 116 de carbonitruration de la nouvelle surface extérieure du nouveau revêtement en acier de sorte à obtenir une nouvelle couche de matériau enrichi en carbonitrure métallique. On obtient ainsi une nouvelle couche de matériau enrichi en carbonitrure métallique 24.

On peut ainsi réutiliser le noyau métallique 20 et lui faire subir plusieurs cycles de conformation à chaud. Le nombre de cycles de conformation à chaud subit par le noyau métallique 20 a ainsi été augmenté.

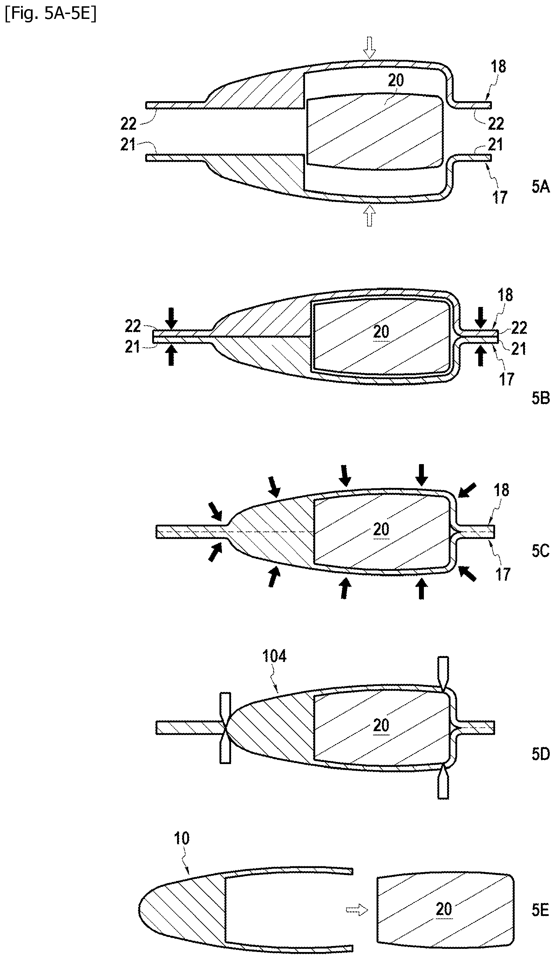

Le procédé de conformation à chaud d'une pièce métallique 10 en alliage à base de titane autour du noyau métallique 20 est illustré aux figures 5A à 5E. Il comprend les étapes de positionnement de la pièce métallique autour du noyau 20 (figures 5A et 5B), de conformation à chaud de la pièce métallique 10' autour du noyau métallique (figure 5C) et d'extraction du noyau métallique de la pièce métallique 10' (figures 5D et 5E). On notera que dans cet exemple, après conformation à chaud, la pièce métallique est découpée (figure 5D) afin de rendre l'extraction du noyau 20 possible (figure 5E). On obtient ainsi un bouclier de bord d'attaque 10' qui peut être positionné et attaché sur le bord d'attaque de l'aube 4.

On notera que le procédé de conformation à chaud de la pièce métallique 10 ne comporte pas d'étape d'usinage de la surface du bord d'attaque 5 destiné à être mis en contact avec l'aube.

En effet, lors de l'étape de conformation à chaud, il n'y a pas de collage et / ou de réaction chimique entre le noyau métallique 20 et la pièce métallique 10 car la pièce métallique 10 est en contact avec la couche de matériau enrichi en carbonitrure métallique 24 et non avec l'alliage 25 à base de nickel ou de cobalt formant le noyau métallique.

Par ailleurs, la couche de matériau enrichi en carbonitrure métallique 24 est inerte chimiquement et physiquement vis-à-vis de la pièce métallique 10. Cette couche 24, de par la dispersion de carbures et nitrures forme une barrière de diffusion entre l'alliage du noyau métallique 20 et l'alliage à base de titane de la pièce métallique 10. On limite ainsi la contamination de la pièce métallique 10 en alliage à base de titane par des éléments de l'alliage à base de nickel ou de cobalt du noyau métallique 20.

Ce procédé de conformation peut comprendre les étapes de fabrication du noyau métallique 20 ou les étapes de régénération du noyau métallique 20 décrites précédemment.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. Par exemple, l'invention n'est pas limitée aux boucliers de bords d'attaque d'aubes rotatives. En effet, le noyau métallique ainsi que les procédés de fabrication et de régénération peuvent être utilisés pour fabriquer toute autre pièce métallique en alliage à base de titane par conformation à chaud autour d'un noyau métallique tel que défini. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Noyau métallique (20) pour conformation à chaud d'une pièce métallique (10 ; 10') en alliage à base de titane, le noyau métallique (20) comprenant un coeur (20A) en alliage à base de nickel ou de cobalt **caractérisé en ce que** le noyau métallique (20) comprend un revêtement en acier (20B) comportant une surface extérieure (23) destinée à venir en contact avec la pièce métallique (10 ; 10'), le revêtement en acier (20B) présentant une couche de matériau enrichi en carbonitrure métallique (24).

2. Noyau métallique (20) selon la revendication 1, dans lequel le revêtement en acier (20B) présente une épaisseur supérieure ou égale à 50 µm, de préférence supérieure ou égale à 75 µm et inférieure ou égale à 200 µm de préférence inférieure ou égale à 150 µm.

3. Noyau métallique (20) selon la revendication 1 ou 2, dans lequel la surface extérieure (23) présente une rugosité de surface Ra supérieure ou égale à 0,5 µm, de préférence supérieure ou égale à 0,7 µm et inférieure ou égale à 10 µm, de préférence inférieure ou égale à 5 µm.

4. Noyau métallique (20) selon l'une quelconque des revendications 1 à 3, dans lequel le revêtement en acier (20B) présente une épaisseur (E1) supérieure ou égale à une épaisseur (E2) de la couche de matériau enrichi en carbonitrure métallique (24).

5. Procédé de fabrication d'un noyau métallique (20) selon l'une quelconque des revendications 1 à 4, comprenant les étapes suivantes :
- fabrication du coeur (20A) du noyau métallique (20) ;
- revêtement du coeur par un revêtement en acier (20B) ; et
- carbonitruration de la surface extérieure (23) du revêtement en acier (20B) de sorte à obtenir une couche de matériau enrichi en carbonitrure métallique (24).

6. Procédé de fabrication selon la revendication 5, dans lequel la carbonitruration de la surface extérieure (23) du revêtement en acier (20B) est réalisée pendant un temps inférieur ou égal à 10 heures, de préférence inférieur ou égal à 8 heures, de préférence inférieur ou égal à 6 heures et supérieur ou égal à 0,5 heure, de préférence supérieur ou égal à 1 heure.

7. Procédé de fabrication selon la revendication 5 ou 6, dans lequel avant l'étape de carbonitruration, le revêtement en acier (20B) est sablé.

8. Procédé de régénération d'un noyau métallique (20) selon l'une quelconque des revendications 1 à 4, comprenant les étapes suivantes :
- enlèvement du revêtement en acier (20B) ;
- revêtement du coeur par un nouveau revêtement en acier comportant une nouvelle surface extérieure (23) destinée à venir en contact avec la pièce métallique (10 ; 10') ; et
- carbonitruration de la nouvelle surface extérieure (23) du nouveau revêtement en acier de sorte à obtenir une nouvelle couche de matériau enrichi en carbonitrure métallique (24).

9. Procédé de conformation à chaud d'une pièce métallique (10 ; 10') en alliage à base de titane, comprenant les étapes suivantes :
- positionnement de la pièce métallique (10 ; 10') autour d'un noyau métallique (20) ;
- conformation à chaud de la pièce métallique (10 ; 10') autour du noyau métallique (20) ; et
- extraction du noyau métallique (29), **caractérisé en ce que** le positionnement est fait autour d'un noyau métallique (20) selon l'une quelconque des revendications 1 à 4.

10. Procédé de conformation selon la revendication 9, dans lequel la pièce métallique (10) est un bouclier de bord d'attaque (10') d'une aube rotative.

## Patentansprüche

1. Metallkern (20) zur Warmumformung eines Metallteils (10; 10') aus einer Legierung auf Grundlage von Titan, wobei der Metallkern (20) ein Kernstück (20A) aus einer Legierung auf Grundlage von Nickel oder Kobalt umfasst, **dadurch gekennzeichnet, dass** der Metallkern (20) eine Verkleidung aus Stahl (20B) umfasst, die eine äußere Oberfläche (23) beinhaltet, die dazu bestimmt ist, mit dem Metallteil (10; 10') in Kontakt zu gelangen, wobei die Verkleidung aus Stahl (20B) eine mit Metall-Karbonitrid angereicherte Materialschicht (24) ist.

2. Metallkern (20) nach Anspruch 1, wobei die Verkleidung aus Stahl (20B) eine Dicke von mehr als oder gleich 50 µm, vorzugsweise mehr als oder gleich 75 µm und weniger als oder gleich 200 µm, vorzugsweise weniger als oder gleich 150 µm aufweist.

3. Metallkern (20) nach Anspruch 1 oder 2, wobei die äußere Oberfläche (23) eine Oberflächenrauigkeit Ra von mehr als oder gleich 0,5 µm, vorzugsweise mehr als oder gleich 0,7 µm und weniger als oder gleich 10 µm, vorzugsweise weniger als oder gleich 5 µm aufweist.

4. Metallkern (20) nach einem der Ansprüche 1 bis 3, wobei die Verkleidung aus Stahl (20B) eine Dicke (E1) aufweist, die größer oder gleich einer Dicke (E2) der mit Metall-Karbonitrid angereicherten Materialschicht (24) ist.

5. Verfahren zur Herstellung eines Metallkerns (20) nach einem der Ansprüche 1 bis 4, umfassend die folgenden Schritte:
- Herstellung des Kernstücks (20A) des Metallkerns (20),
- Verkleidung des Kernstücks mit einer Verkleidung aus Stahl (20B), und
- Karbonitrierung der äußeren Oberfläche (23) der Verkleidung aus Stahl (20B) auf eine Weise, um eine mit Metall-Karbonitrid angereicherte Materialschicht (24) zu erhalten.

6. Verfahren zur Herstellung nach Anspruch 5, wobei die Karbonitrierung der äußeren Oberfläche (23) der Verkleidung aus Stahl (20B) während einer Zeit von weniger oder gleich 10 Stunden, vorzugsweise weniger oder gleich 8 Stunden, vorzugsweise weniger oder gleich 6 Stunden und mehr oder gleich 0,5 Stunden, vorzugsweise mehr oder gleich 1 Stunde, verwirklicht wird.

7. Verfahren zur Herstellung nach Anspruch 5 oder 6, wobei vor dem Schritt der Karbonitrierung die Verkleidung aus Stahl (20B) sandgestrahlt wird.

8. Verfahren zur Wiederherstellung eines Metallkerns (20) nach einem der Ansprüche 1 bis 4, umfassend die folgenden Schritte:
- Entfernung der Verkleidung aus Stahl (20B),
- Verkleidung des Kernstücks mit einer neuen Verkleidung aus Stahl, die eine neue äußere Oberfläche (23) beinhaltet, die dazu bestimmt ist, mit dem Metallteil (10; 10') in Kontakt zu gelangen, und
- Karbonitrierung der neuen äußeren Oberfläche (23) der neuen Verkleidung aus Stahl auf eine Weise, um eine neue mit Metall-Karbonitrid angereicherte Materialschicht (24) zu erhalten.

9. Verfahren zur Warmumformung eines Metallteils (10; 10') aus einer Legierung auf Grundlage von Titan, umfassend die folgenden Schritte:
- Positionierung des Metallteils (10; 10') um einen Metallkern (20) herum,
- Warmumformung des Metallteils (10; 10') um den Metallkern (20) herum, und
- Entnahme des Metallkerns (29), **dadurch gekennzeichnet, dass** die Positionierung um einen Metallkern (20) nach einem der Ansprüche 1 bis 4 herum erfolgt.

10. Verfahren zur Umformung nach Anspruch 9, wobei das Metallteil (10) ein Vorderkantenschutz (10') einer drehenden Schaufel ist.

## Claims

1. Metal core (20) for hot-forming a titanium-based alloy metal component (10; 10'), the metal core (20) comprising a nickel- or cobalt-based alloy core (20A) **characterized in that** the metal core (20) comprises a steel coating (20B) having an outer surface (23) intended to come into contact with the metal component (10; 10'), the steel coating (20B) having a layer of metal carbonitride-enriched material (24).

2. Metal core (20) according to claim 1, wherein the steel coating (20B) has a thickness greater than or equal to 50 µm, preferably greater than or equal to 75 µm and less than or equal to 200 µm, preferably less than or equal to 150 µm.

3. Metal core (20) according to claim 1 or 2, wherein the outer surface (23) has a surface roughness Ra greater than or equal to 0.5 µm, preferably greater than or equal to 0.7 µm and less than or equal to 10 µm, preferably less than or equal to 5 µm.

4. Metal core (20) according to any one of claims 1 to 3, wherein the steel coating (20B) has a thickness (E1) equal to or greater than a thickness (E2) of the layer of metal carbonitride-enriched material (24).

5. Process for manufacturing a metal core (20) according to any one of claims 1 to 4, comprising the following steps:
- manufacturing the core (20A) of the metal core (20);
- coating the core with a steel coating (20B); and
- carbonitriding the outer surface (23) of the steel coating (20B) so as to obtain a layer of metal carbonitride-enriched material (24).

6. Process for manufacturing according to claim 5, wherein the carbonitriding of the outer surface (23) of the steel coating (20B) is carried out for a time of less than or equal to 10 hours, preferably less than or equal to 8 hours, preferably less than or equal to 6 hours and greater than or equal to 0.5 hours, preferably greater than or equal to 1 hour.

7. Process for manufacturing according to claim 5 or 6, wherein prior to the carbonitriding step, the steel coating (20B) is sandblasted.

8. Process for regenerating a metal core (20) according to any one of claims 1 to 4, comprising the following steps:
- removing the steel coating (20B);
- coating the core with a new steel coating having a new outer surface (23) intended to come into contact with the metal component (10; 10'); and
- carbonitriding the new outer surface (23) of the new steel coating to obtain a new layer of metal carbonitride-enriched material (24).

9. Process for hot-forming a titanium-based alloy metal component (10; 10'), comprising the following steps:
- positioning the metal component (10; 10') around a metal core (20);
- hot-forming the metal component (10; 10') around the metal core (20); and
- removing the metal core (20)
**characterized in that** the positioning is around a metal core (20) according to any one of claims 1 to 4.

10. Process for forming according to claim 9, wherein the metal component (10) is a leading edge shield (10') of a rotating blade.
